# EUROPÄISCHE PATENTSCHRIFT

(11) **EP 3 141 649 B1**
(45) Veröffentlichungstag und Bekanntmachung des Hinweises auf die Patenterteilung: **21.11.2018**
(21) Anmeldenummer: 16186735.3
(22) Anmeldetag: 01.09.2016
(51) Int. Cl.: D05B 69/10, H02K 7/10

(54) **NÄHMASCHINE MIT EINER ANBAU-ANTRIEBSMOTOR-BAUGRUPPE**
SEWING MACHINE WITH AN ATTACHMENT DRIVE MOTOR ASSEMBLY
MACHINE À COUDRE AVEC UN COMPOSANT DE MOTEUR À COURROIE D'ENTRAÎNEMENT

(30) Priorität: 09.09.2015 DE 102015217216
(43) Veröffentlichungstag der Anmeldung: 15.03.2017
(73) Patentinhaber: Frankl & Kirchner GmbH & Co KG Fabrik für Elektromotoren u. elektrische Apparate, 68723 Schwetzingen (DE)
(72) Erfinder: Kolb, Hans Georg, 68723 Plankstadt (DE)
(74) Vertreter: Rau, Schneck & Hübner Patentanwälte Rechtsanwälte PartGmbB

(56) Entgegenhaltungen:
- EP-B1- 1 137 835
- WO-A1-89/07856
- CN-B- 102 075 037
- CN-U- 202 543 584
- CN-U- 203 768 627
- DE-U- 1 690 614
- DE-U1-202012 012 614
- JP-A- H08 187 385

## Beschreibung

Die Erfindung betrifft eine Nähmaschine mit einer Anbau-Antriebsmotor-Baugruppe. Derartige Baugruppen sind bekannt beispielsweise aus der CN 202 817 967 U, der CN 201 860 197 U und der CN 102 075 037 B. Aus der DE 1 690 614 U ist eine elektrisch angetriebene Nähmaschine bekannt. Die EP 1 137 835 B1 zeigt eine Nähmaschine mit einem Elektromotor, der ein Lüfterrad und einen Drehzahlgeber aufweist. Die DE 29 36 697 C2 zeigt eine weitere Ausführung einer Nähmaschine.

Die DE 20 2012 012 614 U1 beschreibt eine Nähmaschine mit einem Antriebsmotor, dessen Motorwelle über einen Zahnriemen mit einer Armwelle der Nähmaschine in Antriebsverbindung steht. Die JP 08 187 385 beschreibt eine Nähmaschine mit einem Antriebsmotor, der in einem Gehäuseständer der Nähmaschine untergebracht und über ein Schneckengetriebe mit einer Armwelle der Nähmaschine in Antriebsverbindung steht. Die CN 203 768 627 U beschreibt eine Nähmaschine mit einem Antriebsmotor, dessen Motorwelle fluchtend mit einer Nähmaschine-Armwelle über eine Übertragungskupplung in Antriebsverbindung steht. Die CN 202 543 584 U beschreibt eine hierzu vergleichbar aufgebaute Nähmaschine. Die WO 89/07856 A1 beschreibt einen Fahrraddynamo.
Es ist eine Aufgabe der vorliegenden Erfindung, eine Anbau-Antriebsmotor-Baugruppe der eingangs genannten Art und eine hiermit ausgerüstete Nähmaschine derart weiterzubilden, dass sie flexibler, also mit größeren Freiheiten, was die Art des Anbaus angeht, anbringbar ist.

Diese Aufgabe ist erfindungsgemäß gelöst durch eine Anbau-Antriebsmotor-Baugruppe mit den im Anspruch 1 angegebenen Merkmalen und durch eine Nähmaschine mit den im Anspruch 11 angegebenen Merkmalen.

Erfindungsgemäß wurde erkannt, dass es deutliche Vorteile bietet, den Anbau-Antriebsmotor nicht direkt auf die Übertragungswelle der Nähmaschine aufzusetzen bzw. die Motorwelle nicht direkt fluchtend mit der Übertragungswelle anzuordnen. Das flexible Übertragungsglied ermöglicht es, den Anbau-Antriebsmotor freier relativ zur Übertragungswelle zu positionieren. Bauraumanforderungen kann auf diese Weise einfacher Rechnung getragen werden. Zudem erfordert das flexible Übertragungsglied keine hochpräzise Ausrichtung der Motorwelle zur Übertragungswelle. Abstandstoleranzen zwischen der Motorwelle und der Übertragungswelle und/oder Winkeltoleranzen hinsichtlich der Orientierung der beiden Wellenachsen zueinander können toleriert werden. Insbesondere Lateralkräfte können vom flexiblen Übertragungsglied aufgenommen werden, ohne dass dies den Betrieb der Anbau-Antriebsmotor-Baugruppe stört. Im Regelfall ist die Motorwelle nur gering von der Übertragungswelle versetzt bzw. beabstandet, beispielsweise um höchstens 15 cm, um höchstens 10 cm oder um noch einen kleineren Abstandswert. Der Wellenversatz bzw. der Wellenabstand kann kleiner sein als 90 mm, als 80 mm, als 70 mm, als 60 mm, als 50 mm, als 40 mm und kann z. B. 35 mm betragen. Dies ermöglicht einen kompakten Aufbau der Anbau-Antriebsmotor-Baugruppe.

Ein Zahnriemen als Übertragungsglied hat sich als robustes und verschleißarmes Übertragungsglied bewährt.

Eine Encoder-Einheit nach Anspruch 3 ermöglicht eine sichere Positionserkennung der Motorwelle. Soweit eine 1:1-Übersetzung zwischen der Motorwelle und der Übertragungswelle von dem Übertragungsglied gewährleistet ist, ergibt das Ergebnis der Positionserkennung der Motorwelle gleichzeitig die Position der Übertragungswelle, was zu Steuerungsaufgaben der Nähmaschine genutzt werden kann.

Getriebevarianten nach den Ansprüchen 4 bis 6 haben sich je nach Anforderung der Nähmaschine bewährt. Die Übersetzungsgetriebe-Variante nach Anspruch 5 ermöglicht eine hohe Übertragungswellen-Drehzahl. Die Untersetzungsgetriebe-Variante nach Anspruch 6 ermöglicht ein hohes Übertragungswellen-Drehmoment.

Eine Gehäuseunterteilung nach Anspruch 7 ermöglicht es beispielsweise, das Übertragungsglied zumindest bereichsweise unterhalb eines Nähmaschinen-Tischniveaus zu versenken, wobei der Antriebsmotor oberhalb dieses Tischniveaus angeordnet ist. Beispielsweise ein Handrad kann dann für eine Bedienperson frei zugänglich sein, trotz einer unter dem Tischniveau verlaufenden Nähmaschinen-Übertragungswelle. Der Übertragungsglied-Gehäuseabschnitt kann unterteilt sein in einen adaptierenden Gehäuseabschnitt, der an den jeweiligen Nähmaschinentyp angepasst ist und in einen Lagerschild-Gehäuseabschnitt zur eigentlichen Aufnahme des Übertragungsglieds. Soweit das Übertragungsglied als Zahnriemen ausgeführt ist, kann der Lagerschild-Gehäuseabschnitt Führungskomponenten zur Vorgabe einer Lage des Zahnriemens bei der Montage der Baugruppe aufweisen. Diese Führungskomponenten können als Führungsstege ausgeführt sein. Die Führungsstege können einstückig an den Lagerschild-Gehäuseabschnitt angeformt sein. Der Lagerschild-Gehäuseabschnitt kann lateral längs eines Abstandes zwischen der Motorwelle des Anbau-Antriebsmotors und der Übertragungswelle der Nähmaschine stufenlos verlagerbar sein und in einer vorgegebenen Verlagerungsposition am Übertragungsglied-Gehäuseabschnitt fixierbar sein. Hierzu können im Lagerschild-Gehäuseabschnitt Langlöcher ausgebildet sein. Der Lager-Gehäuseabschnitt kann eine Ausnehmung zur Aufnahme eines axialen Abschnitts eines Übertragungswellen-Zahnrades aufweisen, wodurch eine axiale Bautiefe der Baugruppe verringert ist. Der Lagerschild-Gehäuseabschnitt kann unabhängig von der Ausführung der Nähmaschine immer mit gleichem Aufbau realisiert werden.

Eine Aufnahme für einen Positionssensor nach Anspruch 8 erlaubt die kompakte Unterbringung eines Positionssensors zur Erfassung einer Umfangsposition der Übertragungswelle. Ein derartiger Positionssensor kann Bestandteil der Baugruppe sein. Der Positionssensor ermöglicht eine Positionserkennung der Übertragungswelle auch dann, wenn zwischen der Motorwelle und der Übertragungswelle ein Getriebe mit von eins abweichender Übersetzung angeordnet ist.

Ein Hall-Sensor nach Anspruch 9 hat sich als Positionssensor bewährt.

Eine Anordnung des Anbau-Antriebsmotors nach Anspruch 10 ermöglicht einen flexiblen Aufbau. Insbesondere ist ein kleiner Abstand zwischen der Motorwelle des Anbau-Antriebsmotors und der Übertragungswelle realisierbar.

Die Vorteile einer Nähmaschine nach Anspruch 11 entsprechen denen, die vorstehend unter Bezugnahme auf die erfindungsgemäße Anbau-Antriebsmotor-Baugruppe bereits erläutert wurden.

Ausführungsbeispiele der Erfindung werden nachfolgend anhand der Zeichnung näher erläutert. In dieser zeigen:
- Fig. 1: eine Anbau-Antriebsmotor-Baugruppe für eine schematisch angedeutete Nähmaschine;
- Fig. 2: die Anbau-Antriebsmotor-Baugruppe nach Fig. 1 mit abgenommenem Übertragungsglied-Gehäuseabschnitt;
- Fig. 3: in einer zu Fig. 1 ähnlichen Darstellung eine weitere Ausführung einer Anbau-Antriebsmotor-Baugruppe mit in ein Tischniveau der Nähmaschine teilweise versenktem Übertragungsglied-Gehäuseabschnitt;
- Fig. 4: in einer Fig. 1 ähnlichen Ansicht eine weitere Ausführung einer Anbau-Antriebsmotor-Baugruppe, wobei ein Übertragungsglied-Gehäuseabschnitt weggelassen ist;
- Fig. 5: die Baugruppe nach Fig. 4, gesehen aus Richtung eines Lagerschild-Gehäuseabschnitts der Baugruppe; und
- Fig. 6: die Baugruppe nach Fig. 1 mit abgenommenem Antriebsmotor-Gehäuseabschnitt.

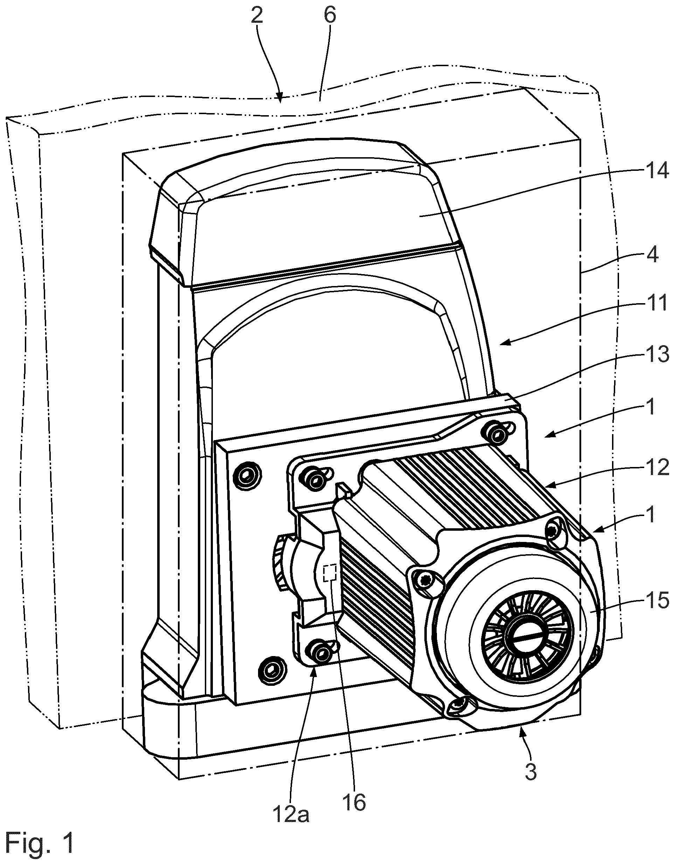

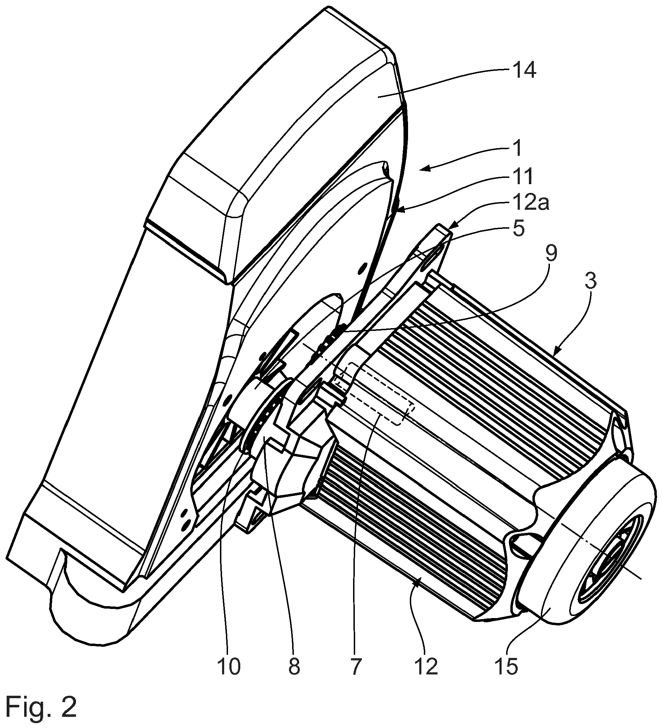

Anhand der Fig. 1 und 2 wird nachfolgend eine erste Ausführung einer Anbau-Antriebsmotor-Baugruppe 1 für eine lediglich schematisch angedeutete Nähmaschine 2 erläutert. Bei der Nähmaschine 2 handelt es sich um eine Overlock-Nähmaschine.

Die Anbau-Antriebsmotor-Baugruppe 1 dient zum Anbau eines Antriebsmotors 3 (vgl. Fig. 2) an die werksseitig mit vorgegebenen Anbaumaßen vorbereitete Nähmaschine 2. Die Baugruppe ist zum Anbau in einem Anbaubereich 4 der Nähmaschine 2 ausgeführt. Die Bauraumerfordernisse des Anbaubereichs 4 sind in der Fig. 1 durch einen Quader angedeutet. Dieser Anbaubereich 4 muss bei der werksseitigen Vorbereitung der Nähmaschine 2 frei gehalten bleiben.

Der Anbaubereich 4 ist am Ort einer Verlängerung einer Übertragungswelle 5 (vgl. Fig. 2) der Nähmaschine 2 aus einem Gehäuse 6 der Nähmaschine 2 heraus angeordnet.

Der Anbau-Antriebsmotor 3 ist derart zum Anbau an die Nähmaschine 2 ausgeführt, dass eine Motorwelle 7 des Anbau-Antriebsmotors 3, deren Verlauf in der Fig. 2 gestrichelt angedeutet ist, nicht mit der Übertragungswelle 5 der Nähmaschine 2 fluchtet.

Bei der Übertragungswelle 5 handelt es sich um eine Unterwelle der Nähmaschine 2, die im Bereich einer Grundplatte des Nähmaschinen-Gehäuses 6 verläuft.

Zur Kraftübertragung von der Motorwelle 7 des Anbau-Antriebsmotors 3 auf die Übertragungswelle 5 der Nähmaschine 2 dient ein flexibles Übertragungsglied, das als Zahnriemen 8 (vgl. Fig. 2) ausgeführt ist.

Ein Abstand zwischen den parallel verlaufenden Wellenachsen der Übertragungswelle 5 und der Motorwelle 7 ist im Vergleich zu den typischen Abmessungen der Anbau-Antriebsmotor-Baugruppe 1 gering und ist im Regelfall kleiner als 15 cm.

Der Zahnriemen 8 überträgt die Antriebskraft von einem drehfest mit der Motorwelle 7 verbundenen Antriebs-Zahnrad 9 auf ein drehfest mit der Übertragungswelle 5 verbundenes Übertragungs-Zahnrad 10.

Die beiden Zahnräder 9 und 10 haben die gleiche Zahnzahl, so dass eine Antriebsübersetzung von exakt eins resultiert. Der Antriebsmotor 3 ist mit einer Encoder-Einheit zur Positionserkennung einer Umfangsposition der Motorwelle 7 ausgerüstet. Über die Umfangsposition der Motorwelle 7 ist aufgrund der 1:1-Übersetzung auch die Umfangsposition der Übertragungswelle 5 und damit die Position von über diese angetriebene Komponenten bestimmt.

Ein Gehäuse 11 der Anbau-Antriebsmotor-Baugruppe 1 ist unterteilt in mehrere voneinander lösbare Abschnitte. Hierzu gehört ein Antriebsmotor-Gehäuseabschnitt 12, an den sich ein Lagerschild-Gehäuseabschnitt 12a und ein Übertragungsglied-Gehäuseabschnitt 13 anschließen. Im Vergleich zur Fig. 1 sind in der Fig. 2 diese drei Gehäuseabschnitte 12, 12a, 13 abgenommen. An den Übertragungsglied-Gehäuseabschnitt 13 schließt sich ein nähmaschinenseitiger Gehäuseabschnitt 14 an.

Die Gehäuseabschnitte 12, 12a und 13 sind aus Kunststoff. Alternativ kann insbesondere der Lagerschild-Gehäuseabschnitt 12a aus Aluminium gefertigt sein.

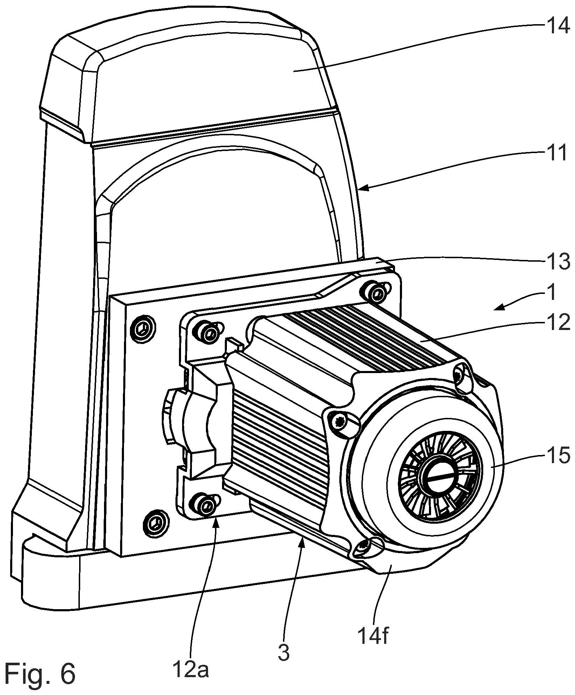

Der Antriebsmotor-Gehäuseabschnitt 12 dient einerseits zur Abdeckung des Antriebsmotors 3 und andererseits als Hitzeschild. In der Fig. 6 ist der Antriebsmotor-Gehäuseabschnitt 12 weggelassen.

Der Lagerschild-Gehäuseabschnitt 12a dient zur Aufnahme des Antriebs-Zahnrads 9, des Übertragungs-Zahnrads 10 und des Zahnriemens 8. Eine runde Ausnehmung 14a im Lagerschild-Gehäuseabschnitt 12a dient zur Aufnahme eines axial führenden Abschnitts des Übertragungs-Zahnrads 10 und ermöglicht es, dass der Lagerschild-Gehäuseabschnitt 12a axial möglichst nahe an die Nähmaschine 2 heranrückt. Der Lagerschild-Gehäuseabschnitt 12a weist eine Mehrzahl von Führungsstegen 14b auf. Die Führungsstege 14b sind einstückig an einen Grundkörper des Lagerschild-Gehäuseabschnitts 12a angeformt.

Die Führungsstege 14b haben stirnseitig jeweils eine axial überstehende Führungsnase 14c. Stirnseitige Führungsflächen 14d der Führungsnasen 14c geben eine stadionförmige Führungs-Außenkontur für den Zahnriemen 8 vor. Bei der Montage der Anbau-Antriebsmotor-Baugruppe 1 kann der Zahnriemen 8 zwischen diese Führungsflächen 14d eingelegt werden und nimmt dabei jedenfalls angenähert die Form an, die er endmontiert bei der Kraftübertragung zwischen den Zahnrädern 9, 10 ebenfalls hat. Ein Einrücken der Zähne der Zahnräder 9, 10 in die komplementären Zähne des Zahnriemens 8 bei der folgenden Montage der Baugruppe 1 ist dann erleichtert.

In Richtung eines Abstandes zwischen den Wellen 5, 7 ist der Lagerschild-Gehäuseabschnitt 12a lateral relativ zum Übertragsglied-Gehäuseabschnitt 13 zum Spannen des Zahnriemens 8 stufenlos verlagerbar. Eine vorgegebene Endposition des Lagerschild-Gehäuseabschnitts 12a relativ zum Übertragungsglied-Gehäuseabschnitt 13 wird über Schrauben, die durch Langlöcher 14e im Lagerschild-Gehäuseabschnitt 12a geführt sind, fixiert.

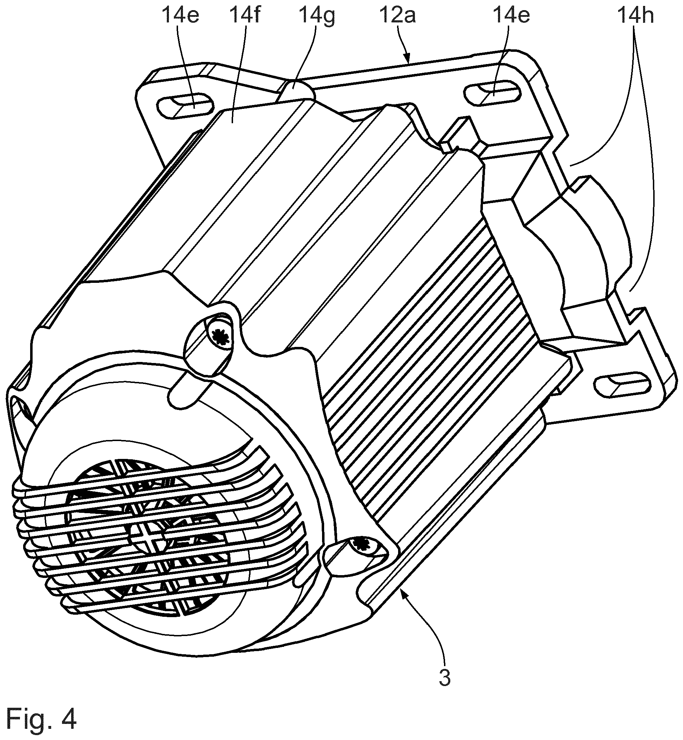

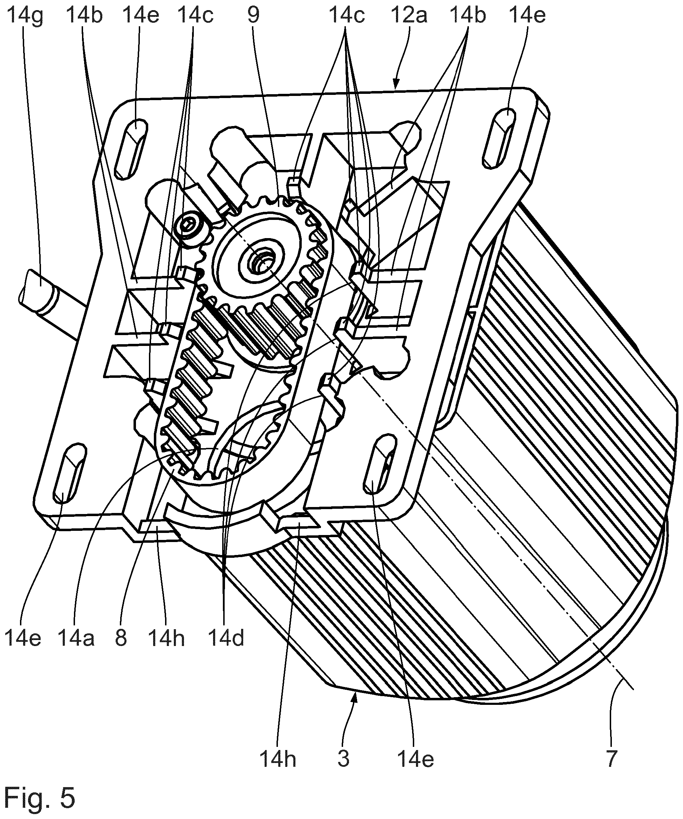

Die Figuren 4 und 6 zeigen bei den dortigen Baugruppe-Ausführungen noch jeweils einen Kabelabdeckungs-Gehäuseabschnitt 14f, der seitlich am Antriebsmotor 3 angebracht ist. Dieser Kabelabdeckungs-Gehäuseabschnitt 14f deckt einen Abschnitt eines in der Fig. 5 schematisch dargestellten Kabelbündels 14g ab. Das Kabelbündel 14g beinhaltet Signalkabel für die Encoder-Einheit sowie Signalkabel für eine Motorsteuerung.

Bei einer nicht dargestellten Ausführung der Kraftübertragung von der Motorwelle 7 auf die Übertragungswelle 5 kommt ein Getriebe mit von eins abweichender Übersetzung zwischen der Motorwelle 7 und der Übertragungswelle 5 zum Einsatz. Das Getriebe kann dabei wahlweise als Übersetzungsgetriebe oder als Untersetzungsgetriebe ausgeführt sein. Bei einem Übersetzungsgetriebe können hohe Drehzahlen der Übertragungswelle 5 bei gegebener Drehzahl der Motorwelle 7 erreicht werden. Bei einem Untersetzungsgetriebe kann bei gegebener Drehzahl der Motorwelle 7 ein hohes Drehmoment an der Übertragungswelle 5 erreicht werden.

Ein über den Antriebsmotor-Gehäuseabschnitt 12 axial überstehendes, freies Ende der Motorwelle 7 ist drehfest mit einem Handrad 15 verbunden.

Insbesondere soweit ein Getriebe mit von eins abweichender Übersetzung zum Einsatz kommt, kann die Anbau-Antriebsmotor-Baugruppe 11 eine Aufnahme für einen Übertragungswellen-Positionssensor 16, insbesondere für einen Hall-Sensor, aufweisen. Dieser Positionssensor 16 ist zum Erfassen einer Umfangsposition der Übertragungswelle 5 ausgeführt. Der Positionssensor 16 dient zu einer elektronischen Synchronisation der Motorwelle 7 mit der Übertragungswelle 5. Der Positionssensor 16 kann als magnetischer Encoder mit insbesondere einer Scheibe aus magnetischem Material und sich abwechselnden Nord- und Südpolelementen, die als Intermentalmarkierungen dienen, ausgeführt sein.

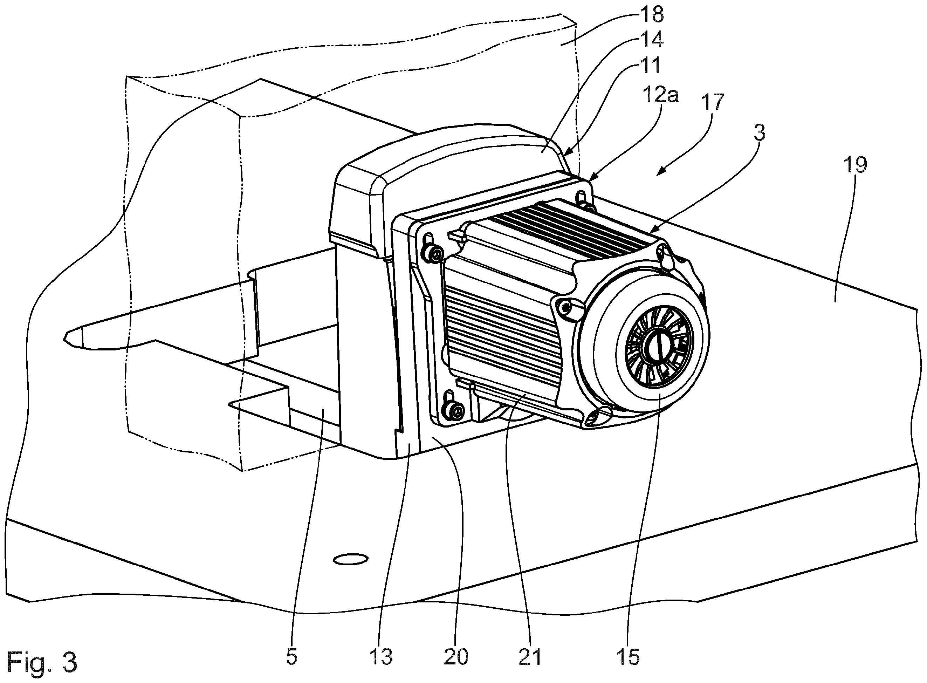

Eine weitere Ausgestaltung einer Anbau-Antriebsmotor-Baugruppe 17 wird nachfolgend anhand der Fig. 3 erläutert. Komponenten, die denjenigen entsprechen, die vorstehend unter Bezugnahme auf die Fig. 1 und 2 bereits beschrieben wurden, tragen die gleichen Bezugsziffern und werden nicht nochmals im Einzelnen diskutiert.

Eine Nähmaschine 18, für die die Anbau-Antriebsmotor-Baugruppe 17 ausgelegt ist, hat eine Übertragungswelle 5, die unterhalb eines Niveaus einer Tischplatte bzw. Grundplatte 19 der Nähmaschine 18 angeordnet ist, welches mit einem Stichplattenniveau zusammenfallen kann.

Eine Anordnung der Motorwelle 7 zur Übertragungswelle 5 ist bei der Anbau-Antriebsmotor-Baugruppe 17 derart, dass die Motorwelle 7 nach oben zur Übertragungswelle 5 versetzt angeordnet ist und oberhalb des Niveaus der Tischplatte 19 verläuft. Ein adaptierender Übertragungsglied-Gehäuseabschnitt 20 der Anbau-Antriebsmotor-Baugruppe 17 ist teilweise in der Tischplatte 19 versenkt angeordnet, so dass ein Bereich des Übertragungs-Gehäuseabschnitts 20 unterhalb des Niveaus der Tischplatte 19 und ein sonstiger Bereich des Übertragungs-Gehäusesabschnitts 20 oberhalb des Niveaus der Tischplatte 19 angeordnet ist. Ein Antriebsmotor-Gehäuseabschnitt 21 der Anbau-Antriebsmotor-Baugruppe 17 ist oberhalb des Niveaus der Tischplatte 19 angeordnet, so dass trotz einer unter dem Tischniveau liegenden Übertragungswelle 5 das Handrad 15 für eine Bedienperson frei zugänglich ist.

Bei den vorstehend beschriebenen, verschiedenen Ausführungen der Anbau-Antriebsmotor-Baugruppen ist der Lagerschild-Gehäuseabschnitt 12a jeweils identisch ausgeführt. Zur Adaption der jeweiligen Baugruppe an die Nähmaschine 2 bzw. an den nähmaschinenseitigen Gehäuseabschnitt 14 dient der Übertragungsglied-Gehäuseabschnitt 13 oder 20. Dieser ist also jeweils abhängig vom Nähmaschinentyp ausgeführt. Soweit ein größerer Wellenabstand vom Zahnriemen 8 überbrückt werden muss, sind im Lagerschild-Gehäuseabschnitt 12a Durchschnittsausnehmungen 14h ausgeführt, durch die der Zahnriemen 8 seitlich aus dem Lagerschild-Gehäuseabschnitt 12a nach außen geführt werden kann.

Eine Umfangsposition des Kabelabdeckungs-Gehäuseabschnitts 14f am Antriebsmotor 3 ergibt sich je nach den baulichen Anforderungen für die Anbau-Antriebsmotor-Baugruppe. Bei der Ausführung nach Fig. 4 ist der Kabelabdeckungs-Gehäuseabschnitt 14f horizontal neben dem Antriebsmotor 3 auf der in der Fig. 4 rechten Seite angeordnet. Bei der Ausführung nach Fig. 6 ist der Kabelabdeckungs-Gehäuseabschnitt 14f unterhalb des Antriebsmotors 3 angeordnet.

## Patentansprüche

1. Nähmaschine (2; 18) mit einer Anbau-Antriebsmotor-Baugruppe (1; 17),
- mit einem Anbau-Antriebsmotor (3)
-- ausgeführt zum Anbau in einem Anbaubereich (4), der am Ort einer Verlängerung einer Übertragungswelle (5) der Nähmaschine (2; 18) aus einem Gehäuse (6) der Nähmaschine (2; 18) heraus angeordnet ist,
-- ausgeführt zum Anbau derart, dass eine Motorwelle (7) des Anbau-Antriebsmotors (3) nicht mit der Übertragungswelle (5) fluchtet,
- mit einem flexiblen Übertragungsglied (8) zur Kraftübertragung von der Motorwelle (7) des Anbau-Antriebsmotors (3) auf die Übertragungswelle (5) der Nähmaschine (2; 18), wobei es sich bei der Übertragungswelle (5) um eine Unterwelle der Nähmaschine (2) handelt, die im Bereich einer Grundplatte des Nähmaschinen-Gehäuses (6) verläuft.

2. Nähmaschine nach Anspruch 1, **dadurch gekennzeichnet, dass** das Übertragungsglied (8) als Zahnriemen ausgeführt ist.

3. Nähmaschine nach Anspruch 1 oder 2, **gekennzeichnet durch** eine Encoder-Einheit zur Positionserkennung einer Umfangsposition der Motorwelle (7).

4. Nähmaschine nach einem der Ansprüche 1 bis 3, **gekennzeichnet durch** mindestens ein Getriebe (9, 10) mit von 1 abweichender Übersetzung zwischen der Motorwelle (7) und der Übertragungswelle (5).

5. Nähmaschine nach Anspruch 4, **dadurch gekennzeichnet, dass** das mindestens ein Getriebe (9, 10) als Übersetzungsgetriebe ausgeführt ist.

6. Nähmaschine nach Anspruch 4 oder 5, **dadurch gekennzeichnet, dass** das Getriebe (9, 10) als Untersetzungsgetriebe ausgeführt ist.

7. Nähmaschine nach einem der Ansprüche 1 bis 6, **gekennzeichnet durch** ein mehrere Abschnitte (12, 13) aufweisendes Gehäuse (11) mit einem Übertragungsglied-Gehäuseabschnitt (13) und einem sich hieran anschließenden Antriebsmotor-Gehäuseabschnitt (12).

8. Nähmaschine nach Anspruch 7, **dadurch gekennzeichnet, dass** der Übertragungsglied-Gehäuseabschnitt (13) eine Aufnahme für einen Übertragungswellen-Positionssensor (16) aufweist.

9. Nähmaschine nach Anspruch 8, **dadurch gekennzeichnet, dass** der Positionssensor (16) als Hall-Sensor ausgeführt ist.

10. Nähmaschine nach einem der Ansprüche 1 bis 9, **gekennzeichnet durch** eine Ausführung derart, dass das Übertragungsglied (8) axial zwischen der Motorwelle (7) und der Übertragungswelle (5) angeordnet ist.

## Claims

1. Sewing machine (2; 18) comprising a drive motor attachment assembly (1; 17),
- with a drive motor attachment (3)
-- designed to attach to an attachment region (4), arranged at the place where a transmission shaft (5) of the sewing machine (2; 18) extends out of a housing (6) of the sewing machine (2; 18),
-- designed to attach in such a manner that a motor shaft (7) of the drive motor attachment (3) is not aligned with the transmission shaft (5),
- with a flexible transmission member (8) to transfer force from the motor shaft (7) of the drive motor attachment (3) to the transmission shaft (5) of the sewing machine (2; 18), wherein said transmission shaft (5) is a lower shaft of the sewing machine (2) which runs in the region of a base plate of the sewing machine housing (6).

2. Sewing machine according to claim 1, **characterised in that** the transmission member (8) is designed as a toothed belt.

3. Sewing machine according to claim 1 or 2, **characterised by** an encoder unit to detect a circumferential position of the motor shaft (7).

4. Sewing machine according to any one of the claims 1 to 3, **characterised by** at least one gearing (9, 10) with a transmission ratio other than 1:1 between the motor shaft (7) and the transmission shaft (5).

5. Sewing machine according to claim 4, **characterised in that** the at least one gearing (9, 10) is designed as a gearing-up transmission.

6. Sewing machine according to claim 4 or 5, **characterised in that** the gearing (9, 10) is designed as a gearing-down transmission.

7. Sewing machine according to any one of the claims 1 to 6, **characterised by** a housing (11) having a multiplicity of sections (12, 13) with a transmission member housing section (13) and a drive motor housing section (12) attaching to it.

8. Sewing machine according to claim 7, **characterised in that** the transmission member housing section (13) has a mounting for a transmission shaft position sensor (16).

9. Sewing machine according to claim 8, **characterised in that** the position sensor (8) is designed as a Hall sensor.

10. Sewing machine according to any one of the claims 1 to 9, **characterised by** an embodiment wherein the transmission member (8) is arranged axially between the motor shaft (7) and the transmission shaft (5).

## Revendications

1. Machine à coudre (2 ; 18) comprenant un module de moteur d'entraînement rapporté (1 ; 17),
- comprenant un moteur d'entraînement rapporté (3)
-- réalisé pour être monté dans une région de montage (4) qui est disposée à l'emplacement d'un prolongement d'un arbre de transmission (5) de la machine à coudre (2 ; 18) hors d'un boîtier (6) de la machine à coudre (2 ; 18),
-- réalisé pour être monté de telle sorte qu'un arbre de moteur (7) du moteur d'entraînement rapporté (3) ne soit pas aligné avec l'arbre de transmission (5),
- comprenant un organe de transmission flexible (8) servant à la transmission de force de l'arbre de moteur (7) du moteur d'entraînement rapporté (3) à l'arbre de transmission (5) de la machine à coudre (2 ; 18), l'arbre de transmission (5) étant un arbre inférieur de la machine à coudre (2), lequel s'étend dans la région d'une plaque de base du boîtier de machine à coudre (6).

2. Machine à coudre selon la revendication 1, **caractérisée en ce que** l'organe de transmission (8) est réalisé sous forme de courroie dentée.

3. Machine à coudre selon la revendication 1 ou 2, **caractérisée par** une unité de codeur servant à la détection d'une position périphérique de l'arbre de moteur (7).

4. Machine à coudre selon l'une des revendications 1 à 3, **caractérisée par** au moins un engrenage (9, 10) présentant un rapport de multiplication différent de 1 entre l'arbre de moteur (7) et l'arbre de transmission (5).

5. Machine à coudre selon la revendication 4, **caractérisée en ce que** ledit au moins un engrenage (9, 10) est réalisé sous forme d'engrenage multiplicateur.

6. Machine à coudre selon la revendication 4 ou 5, **caractérisée en ce que** l'engrenage (9, 10) est réalisé sous forme d'engrenage réducteur.

7. Machine à coudre selon l'une des revendications 1 à 6, **caractérisée par** un boîtier (11) comprenant plusieurs parties (12, 13), lequel boîtier est doté d'une partie de boîtier d'organe de transmission (13) et d'une partie de boîtier de moteur d'entraînement (12) s'y raccordant.

8. Machine à coudre selon la revendication 7, **caractérisée en ce que** la partie de boîtier d'organe de transmission (13) comprend un logement pour un capteur de position d'arbres de transmission (16).

9. Machine à coudre selon la revendication 8, **caractérisée en ce que** le capteur de position (16) est réalisé sous forme de capteur à effet Hall.

10. Machine à coudre selon l'une des revendications 1 à 9, **caractérisée par** un mode de réalisation de telle sorte que l'organe de transmission (8) soit disposé axialement entre l'arbre de moteur (7) et l'arbre de transmission (5).
